Europäisches Patentamt

European Patent Office

Office européen des brevets

(11) Publication number: 0 298 571 A1

# EUROPEAN PATENT APPLICATION

(21) Application number: 88201438.4

(22) Date of filing: 05.07.88

(51) Int. Cl.⁴: G01S 5/00

(30) Priority: 10.07.87 GB 8716239

(43) Date of publication of application:
11.01.89 Bulletin 89/02

(84) Designated Contracting States:
DE FR GB IT NL

(71) Applicant: BRITISH AEROSPACE PUBLIC
LIMITED COMPANY
11 Strand
London WC2N 5JT(GB)

(72) Inventor: Newton, Arthur Charles Air
Weapons Division
British Aerospace PLC Manor Road
Hatfield Herts AL10 9LL(GB)
Inventor: Murphy, Timothy J. Air Weapons
Division
British Aerospace PLC Manor Road
Hatfield Herts AL10 9LL(GB)

(74) Representative: Dowler, Edward Charles et al
British Aerospace Corporate Patents Dept.
Brooklands Road
Weybridge(GB)

(54) Position identification.

(57) A method of identifying the position of an item
(1) relative to a moveable platform (2) in which, on
board the platform whilst it is at two spaced positions separated by a known distance and direction of
travel, the time taken for a radio signal to pass
between the platform and the item is determined and
hence also the respective distances between the
item and said two positions are determined.

Fig.1.

## POSITION IDENTIFICATION

This invention relates to a method and apparatus for identifying the position(s) of one or more items of apparatus from a remote or stood off location. More particularly, but not exclusively, it relates to a method and apparatus for enabling a sub-sea target hunting platform to identify the positions of a series of sonar buoys previously released from the platform and hence also to identify the position of a target detected by the buoys.

It is known for an aircraft to release a patterned group of sonar buoys into the sea and then to receive from the buoys radio signals indicative of a target which they may have picked up. By a process of triangulation, the position of the target can then be identified and the target attacked. For this to be accurate, the positions of the buoys needs to be known accurately. The aircraft may know fairly accurately its position when each buoy is dropped but, of course, as soon as the buoy has been dropped, it will generally start to drift with the wind and sea current. Usually the buoy positions are calculated by adding to the drop positions a drift distance determined from pre-determined wind and sea current factors and the elapsed time since the drop. Also it is usually assumed that all the buoys drift at the same rate and in the same direction. All of this makes for inaccuracy in the position identification. The problems may become particularly acute in a situation where the aircraft is required to release the sonar buoys and then take up a remote position, perhaps several kilometers away from the buoys, with a view to subsequently launching a stand off weapon at the target.

Some modern navigation systems permit very accurate position identification. For example, the Global Position Survey (GPS) system using quite complex equipment on board an aircraft say and a global network of accurately located spacecraft equipped with accurate atomic clocks enables the aircraft always to know its position to within no more than a few meters or so. However, it would be quite uneconomic for the kind of sonar buoy in question to be equipped with GPS receiving apparatus.

According to one aspect of the invention there is provided a method of identifying the position of an item relative to a moveable platform in which, on board the platform whilst it is at two spaced positions separated by a known distance and direction of travel, the time taken for a radio signal to pass between the platform and the item is determined and hence also the respective distances between the item and the said two positions are determined.

Further aspects of the invention will be apparent from the following description of certain embodiments thereof. In the description, reference will be mode, by way of example, to the accompanying drawing, in which:-

Figure 1 is a diagrammatic view of an aircraft and a series of sonar buoys previously laid by the craft, and

Figure 2 is a plan view showing how the aircraft determines the relative position of each buoy.

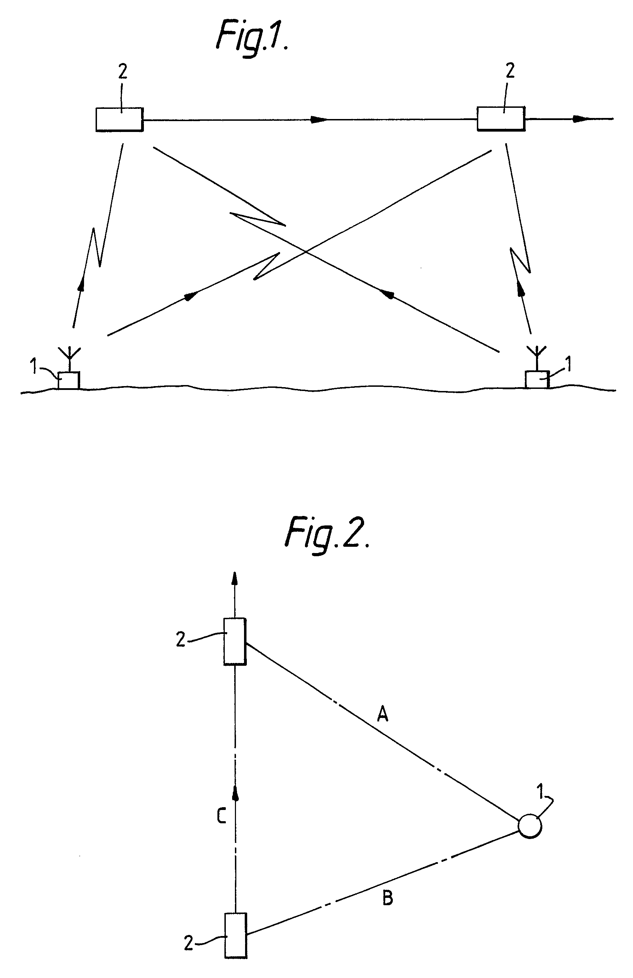

In Figure 1, a group of sub-sea target detecting sonar buoys 1 (only two shown) have been dropped into the sea from a platform such as an aircraft 2, the aircraft then having moved to a stand off position perhaps 5 Km or so from the group. The platform 2 is fitted with navigation equipment (not shown) for example equipment for receiving the transmissions from spacecraft forming part of the Global Position Survey (GPS) network, or any other suitable navigation equipment. Meanwhile, the sonar buoys 1 are fitted with crystal controlled clocks (not shown) whereby they are able to transmit to the aircraft radio signals indicative of time as measured by the clocks. These signals are received by the platform after respective delays dependent upon the distances between the platform and the buoys so that, making use of a like crystal controlled clock on board the platform and appropriate time delay measuring apparatus, the distances can be determined. The distance measurements are made twice for each buoy as shown in Figure 2 whereupon, since the platform knows its positions when the two distances A and B are measured and hence the distance C between those positions, if can determine the position of the-buoy.

As well as time signals, the buoys transmit radio signals indicative of sonar signals which they receive so then knowing the position of a target relative to the buoys and the positions of the buoys relative to the platform, the target position can be determined and an appropriate weapon launched to it from the stood off position of the platform.

To permit the above, the platform only really needs to know the target position and hence also the buoy positions relative to itself and this can be obtained from a knowledge of the length and direction of line C in Figure 2, ie. the platform does not necessarily have to know its absolute positions at the two ends of line C. This length and direction should be obtainable sufficiently accurately from an inertial navigation system on board the platform ie. it does not have to carry GPS equipment provided it has some suitable alternative navigation system.

Errors in measurement of the distances A and B in Figure 2 may arise through fixed or varying relative bias of the clocks on board the platform and buoys and through say temperature dependent variation of the signal processing time on board the platform and buoys. Given that the mission time between dropping of the buoys and launch of the weapon is likely to be fairly short, perhaps ten minutes or so, no very expensive solution such as the adoption of atomic clocks is thought necessary - however, the crystal controlled clocks should be at the more advanced end of the range of presently available technology. Remaining errors could be minimised by use of some of the techniques presently used for GPS equipment, for example by having the buoys transmit particular coded signals rather than just discrete lapsed time pulses and the adoption of Kalman filtering on board the buoys and/or the platform to give estimations of and subsequent correction of system errors.

Instead of having clocks on board the buoys, the latter could comprise active (or possibly even passive) transponders which return signals transmitted to them from the platform. Timing apparatus on board the platform is then used to measure the time it takes for the signals to travel to and return from the buoys and hence also to measure the buoy distance.

The scheme described above could also be used for over-land operations, ie. where a platform such as an aircraft measures the positions, from a stand off location, of say a target sensor which it or some other platform may have dropped or which is otherwise planted and can then launch a weapon from the stand off location to a target detected by the sensor.

## Claims

1. A method of identifying the position of an item relative to a moveable platform in which, on board the platform whilst it is at two spaced positions separated by a known distance and direction of travel, the time taken for a radio signal to pass between the platform and the item is determined and hence also the respective distances between the item and said two positions are determined.

2. A method of identifying the position of a target relative to a moveable platform in which, on board the platform there are received radio signals from one or more target sensors identifying the target position relative to the sensor(s) and wherein the position of the or each sensor relative to the platform is identified by the method of claim 1.

3. A method according to claim 1 or 2, wherein said known distance and direction of travel of the platform are identified by use of navigation equipment on board the platform.

4. Position identifying method substantially as hereinbefore described with reference to the accompanying drawings.

5. A submarine target hunting platform comprising navigation t for determining its distance and direction of travel between two spaced positions, apparatus for measuring the time taken for radio signals to pass between it and each of a patterned series of target-sensor buoys with a view to determining the positions of the buoys in accordance with claim 1, apparatus for receiving and processing target indicative signals from the buoys, and stand-off weapon means for being launched towards a detected target.

## Fig.1.

## Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| Y | US-A-3 546 666 (G.H. ZIEHM et al.)<br>* figure 1; abstract * | 1 | G 01 S 5/00 |
| Y | US-A-3 183 478 (Z.I. SLAWSKY et al.)<br>* figure 1; column 3, lines 50-60; column 4, lines 31-52 * | 1 | |
| Y | US-A-3 860 900 (R.J. SCUDDER)<br>* figure 1; column 5, lines 6-23 * | 1,2 | |
| Y | US-A-3 378 842 (B.E. PHILIPS)<br>* figure 1; column 3, lines 3-17 * | 1,2 | |
| A | EP-A-0 120 520 (PHILIPS)<br>* figure 1; abstract * | | |
| A | DE-A-2 137 074 (FRIED. KRUPP)<br>* figure 1; page 5, line 17 - page 6, line 6 * | | |
| A | US-A-4 622 557 (E.E. WESTERFIELD)<br>* figure 1; column 2, lines 17-30 * | | TECHNICAL FIELDS SEARCHED (Int. Cl.3) |
| A | US-A-4 070 671 (J.A. MORROW)<br>* figure 1; abstract * | | G 01 S 5/00<br>G 01 S 5/18 |

The present search report has been drawn up for all claims

| Place of search | Date of completion of the search | Examiner |
|---|---|---|
| BERLIN | 19-10-1988 | BREUSING J |

EPO FORM 1503 03.82 (P0401)